# EUROPÄISCHE PATENTSCHRIFT

(11) **EP 1 520 126 B1**
(45) Veröffentlichungstag und Bekanntmachung des Hinweises auf die Patenterteilung: **26.08.2009**
(21) Anmeldenummer: 03762601.7
(22) Anmeldetag: 03.07.2003
(51) Int. Cl.: F16H 61/02, F16H 61/12

(54) **EINRICHTUNG ZUR BEWERTUNG VON FAHRZEUG-, ANTRIEBS- UND BETRIEBSPARAMETERN**
DEVICE FOR EVALUATING VEHICLE, DRIVING AND OPERATING PARAMETERS
DISPOSITIF D'EVALUATION DE PARAMETRES DE VEHICULE, D'ENTRAINEMENT ET DE FONCTIONNEMENT

(30) Priorität: 09.07.2002 DE 10230765
(43) Veröffentlichungstag der Anmeldung: 06.04.2005
(73) Patentinhaber: ZF FRIEDRICHSHAFEN Aktiengesellschaft, 88038 Friedrichshafen (DE)
(72) Erfinder: KARCH, Gerald, 88045 Friedrichshafen (DE); WINKEL, Matthias, 88250 Weingarten (DE)
(86) Internationale Anmeldenummer: PCT/EP2003/007090
(87) Internationale Veröffentlichungsnummer: WO 2004/005768

(56) Entgegenhaltungen:
- EP-A- 0 310 275
- EP-A- 1 120 588
- DE-A- 4 438 914
- DE-A- 19 741 182
- US-A- 5 593 364

## Beschreibung

Die Erfindung betrifft eine Einrichtung zur Bewertung von Fahrzeug-, Antriebs- und Betriebsparametern nach der im Oberbegriff von Anspruch 1 näher definierten Art.

Der Wunsch nach größerer Wirtschaftlichkeit bei sehr guter Fahrbarkeit verlangt eine bessere Anpassung der Fahrzeugbetriebsbedingungen bei Kraftfahrzeugen an die günstigsten Betriebsbereiche eines Antriebsmotors. Dies wird durch vielstufige oder stufenlose Getriebe mit einem großen Übersetzungsbereich erreicht. Um die Vorteile ausnutzen zu können, muß das Getriebe optimal geschaltet bzw. verstellt werden, was hohe Anforderungen an den Fahrer stellt. Betrachtet man das stufenlose Getriebe als ein Getriebe mit unendlich vielen Stufen, können in der Regel die für Stufengetriebe geltenden Überlegungen auch auf stufenlose Getriebe analog übertragen werden. Aus Gründen der Einfachheit wird daher in den folgenden Ausführungen vornehmlich auf Stufengetriebe Bezug genommen und die hierzu passende Terminologie verwendet.

Um den Fahrer zu entlasten und den Fahrkomfort zu erhöhen, werden immer mehr Fahrzeuge angeboten, die einen vollautomatisierten Antriebsstrang haben, bestehend aus einem Motor, einem Anfahrelement, z. B. einer Kupplung und/oder einem Wandler, einem Getriebe mit verschiedenen Übersetzungen und einer Antriebsachse mit Rädern. Ein Teil der Automatisierung besteht darin, für den jeweiligen Betriebszustand des Fahrzeugs eine günstige Übersetzung auszuwählen und den richtigen Schaltzeitpunkt zu bestimmen. Gleichzeitig soll die Wirtschaftlichkeit und der Fahrkomfort berücksichtigt werden.

Bekannte, selbsttätig schaltende Stufenwechselgetriebe für Kraftfahrzeuge werden vorrangig in Abhängigkeit von Drehzahlen, die der Fahrgeschwindigkeit proportional sind, und von Lastzuständen, z. B. der Stellung eines Fahrpedals oder Gaspedals bei Leerlauf, Teillast, Vollast oder Kickdown, selbsttätig im Bereich der zur Verfügung stehenden Gänge geschaltet. Um die Anzahl der Schaltungen zu reduzieren, kann der Fahrer über einen Wählschalter Gänge im oberen oder unteren Bereich von der Schaltfolge ausschließen, z. B. bei Bergfahrt oder im Winterbetrieb.

Es ist ferner bekannt, daß eine Mikroprozessorelektronik nach einem vorgegebenen Rechenprogramm den zu schaltenden Gang bestimmt. Wird in einem Schaltkennfeld eine Hoch-oder Rückschaltkennlinie erreicht, löst die Elektronik einen entsprechenden Schaltvorgang aus. Während des Schaltvorgangs wird das Drehmoment des Motors reduziert, um die Reibelemente geringer zu belasten und den Schaltkomfort zu verbessern. Für verschiedene Fahrsituationen sind mehrere Programme vorgesehen, die verschiedene Schaltkennfelder haben. Dabei kann zwischen den einzelnen Schaltkennfeldern automatisch gewechselt werden. Ferner ist es möglich, die Schaltkennlinien in Abhängigkeit von Betriebsparametern zu adaptieren.

Für Nutzkraftfahrzeuge werden häufig vielstufige Schaltgetriebe verwendet, die mit einer Zugkraftunterbrechung geschaltet werden. Es ist eine Steuereinrichtung zum selbsttätigen Schalten von vielgängigen Stufenwechselgetrieben beispielsweise aus der EP 0 255 519 B1 bekannt, bei der Schaltpunkte in Abhängigkeit von der Fahrzeuggeschwindigkeit, der Momentanforderung (Gashebelstellung) und der aus den Drehzahlen der Getriebeabtriebswelle ermittelten Beschleunigung festgelegt werden.

Ferner ist die Gaspedalstellung in drei Bereiche eingeteilt, und zwar in einen Leergasbereich, eine Mittelstellung und einen Vollgasbereich. Zu jedem Bereich der Gaspedalstellung ist ein Beschleunigungsbereich zugeordnet, so daß sich unter diesen Voraussetzungen achtzehn Schaltpunkte ergeben. Die Schaltbedingungen für die Schaltpunkte werden in Tabellen festgehalten, wobei die Werte empirisch oder rechnerisch ermittelt werden. Je nach der Anzahl der verwendeten Fahrprogramme sind mehrere Tabellen erforderlich.

Aus der DE 197 03 561 A1 ist eine Einrichtung zum Auswerten von Fahrzeug-, Antriebs- und Betriebsparametern bekannt, die eine Auswahl von Getriebeübersetzungen bereitstellt und für verschiedene, automatisch verstellbare Getriebe einheitlich anwendbar ist und einen geringen Abstimmungsaufwand erfordert. Diese Einrichtung dient zur Auswertung von Fahrzeug-, Antriebs- und Betriebsparametern eines Fahrzeugs, um eine Übersetzung eines Getriebes nach vorgegebenen Rechenregeln, Kenngrößen oder Kennfeldern mittels eines Mikroprozessors auszuwählen und einzustellen, wobei aus der Änderung einer der Fahrgeschwindigkeit entsprechenden Drehzahl eines Antriebsstrangs mit einem Motor und einem Getriebe eine Beschleunigung des Fahrzeugs rechnerisch ermittelt wird.

Die nach dem Stand der Technik bekannten Einrichtungen zur Bewertung von Fahrzeug-, Antriebs- und Betriebsparametern eines Fahrzeuges, die eine Übersetzung eines Getriebes nach vorgegebenen Rechenregeln, Kenngrößen oder Kennfeldern mittels eines Mikroprozessors auswählen und einstellen weisen den Nachteil auf, daß sie bei den Einflussparametem keine der Haltbarkeit bzw. der Lebensdauer unterworfenen Veränderungen berücksichtigen. Somit erfolgt die Gangwahl anhand von Bewertungskriterien, die auf einen Neuzustand bezogen sind, und nicht die durch den Betrieb verursachten Veränderungen im Getriebe und am Fahrzeug berücksichtigen.

Der vorliegenden Erfindung liegt die Aufgabe zugrunde eine Einrichtung zur Bewertung von Fahrzeug-, Antriebs- und Betriebsparametern eines Fahrzeuges darzustellen, die eine Übersetzung eines Getriebes nach vorgegebenen Rechenregeln, Kenngrößen oder Kennfeldern unter Berücksichtigung von getriebespezifischen Kriterien und Parametern bewertet und mittels eines Mikroprozessors auswählt und einstellt. Dabei erfolgt die Gangwahl insbesondere anhand von Bewertungskriterien, die die durch den Betrieb verursachten Veränderungen im Getriebe und am Fahrzeug berücksichtigen.

Die der Erfindung zugrundeliegende Aufgabe wird durch eine, auch die kennzeichnenden Merkmale des Hauptanspruchs aufweisende, gattungsgemäße Einrichtung zur Bewertung von Fahrzeug-, Antriebs- und Betriebsparametern gelöst.

Der vom Mikroprozessor anhand von Fahrzeug-, Antriebs- und Betriebsparametern ausgewählte und eingestellte Gang wird abhängig von getriebespezifischen Kriterien bewertet, ausgewählt und eingestellt. Die Bewertungskriterien sind speziell an die Getriebeeigenschaften angepasst. Bewertungskriterien können unter anderem die Lebensdauer bzw. die Haltbarkeit aufgrund verschiedener Belastungen verschiedener Getriebebauteile sein. Somit kann beispielsweise die

Betätigungshäufigkeit eines Aktuators oder einer Synchronisierung, oder auch die Lebensdauerauslegung eines Ganges anhand eines Belastungskollektives ein Kriterium für die Wahl des nächsten einzulegenden Ganges sein. Weitere Kriterien können unter anderem folgende sein:
- Geräusche,
- Schaltzeiten,
- Fahranteile in den verschiedenen Gangstufen, also die Zeitdauer, die eine bestimmte Fahrstufe eingelegt ist, auch im Verhältnis zu den Zeitdauern, die andere Fahrstufen eingelegt sind,
- die Verteilung der im Getriebe herrschenden Temperaturen und
- die Alterung des Getriebeöls, wobei die Öltemperatur, die Durchtriebsleistung des Getriebes, die über das Getriebe geflossene Antriebsenergie und Fahranteile in den unterschiedlichen Gangstufen berücksichtigt werden.

Die Erfindung ist für alle Fahrzeuge mit einem voll-oder teilautomatisierten Antriebsstrang, bestehend aus einem Motor mit oder ohne Anfahrelement, z. B. eine Kupplung und/oder einen Wandler, aus einem Getriebe mit verschiedenen Übersetzungen und einer Antriebsachse mit Fahrzeugrädern geeignet. Dabei kann das Getriebe sowohl ein stufenloses Getriebe, als auch ein gestuftes Getriebe sein, das mit Zugkraftunterbrechung oder unter Last geschaltet wird.

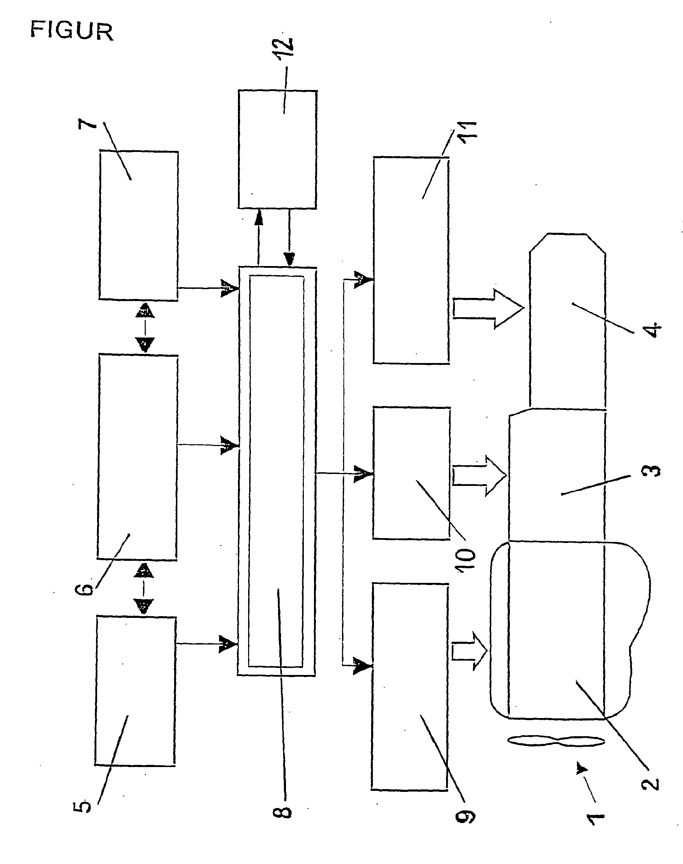

Nachfolgend wird die Erfindung anhand eines in der Figur dargestellten Ausführungsbeispieles näher erläutert.

Die einzige Figur zeigt schematisch den Ablauf einer erfindungsgemäßen Antriebsstrangregelung. Ein Antriebsstrang 1 weist einen Motor 2, ein Anfahrelement, z. B. eine Kupplung bzw. einen Wandler 3 und ein Getriebe 4 auf. Das Getriebe 4 kann ein stufenloses oder ein gestuftes sein, das mit Zugkraftunterbrechung und/oder unter Last geschaltet wird. Ein Mikroprozessor 8 regelt die Antriebseinheiten 2, 3 und 4 des Antriebsstrangs 1 abhängig von Betriebsparametern 5, Antriebsparametern 6 und Fahrzeug- und Getriebeparametern 7 und erzeugt nach vorgegebenen Rechenregeln, Kenngrößen und Kennfeldern Ausgangssignale für Stellglieder 9 des Motors 2, für Stellglieder 10 der Kupplung 3 und Stellglieder 11 des Getriebes 4. Zu den Betriebsparametern 5 gehören z. B. die Position eines Fahrpedals, in der Regel eines Gaspedals, deren Veränderung während einer Zeitspanne sowie die Beschleunigung der Fahrpedalbetätigung und Brems- und Lenksignale. Zu den Antriebsparametern 6 gehören z. B. die Durchflußmenge eines Kraftstoffmessorgans oder ein Lastsignal, eine Motordrehzahl, eine Zündwinkeleinstellung, eine Temperatur, z. B. Kühlmitteltemperatur, Aggregattemperatur, usw. Zu den Fahrzeug- und Getriebeparametern 7 gehören eine Position des Wählhebels bzw. einer Verstell- oder Schalteinrichtung des Getriebes 4, eine Fahrgeschwindigkeit oder eine mit dieser zusammenhängende Drehzahl im Antriebsstrang, Längs- und Querbeschleunigungen, Beladungszustände, Fahrwiderstände und Temperaturen. Aufgrund der Fahrzeug- und Getriebeparameter 7 findet eine Gangbewertung 12 statt, die den neu einzustellenden Gang auswählt und mit Hilfe des Stellgliedes 11 des Getriebes 4 einstellt.

### Bezugszeichen

- 1: Antriebsstrang
- 2: Motor
- 3: Kupplung/Wandler
- 4: Getriebe
- 5: Betriebsparameter
- 6: Antriebsparameter
- 7: Fahrzeug- und Getriebeparameter
- 8: Mikroprozessor
- 9: Stellglieder für den Motor
- 10: Stellglieder für die Kupplung
- 11: Stellglieder für das Getriebe
- 12: Gangbewertung

## Patentansprüche

1. Einrichtung zur Bewertung von Fänrzeug-, Antriebs- und Betriebsparametern eines Fahrzeuges, um eine Übersetzung eines Getriebes nach vorgegebenen Rechenregeln, Kenngrößen oder Kennfeldern mittels eines Mikroprozessors auszuwählen und einzustellen, **dadurch gekennzeichnet, dass** der vom Mikroprozessor ausgewählte und eingestellte Gang abhängig von der Betätigungshäufigkeit eines Aktuators oder der Lebensdauerauslegung eines Ganges bewertet, ausgewählt und eingestellt wird.

## Claims

1. Device for evaluating vehicle, drive and operating parameters of a vehicle, in order to select and set a transmission ratio of a transmission in accordance with predefined calculation rules, characteristic variables or characteristic maps using a microprocessor, **characterized in that** the gear selected and set by the microprocessor is evaluated, selected and set as a function of the operating frequency of an actuator or the service life rating of a gear.

## Revendications

1. Dispositif d'évaluation de paramètres de véhicule, d'entraînement et de fonctionnement d'un véhicule, pour sélectionner et ajuster une démultiplication d'une transmission selon des règles de calcul, des valeurs caractéristiques ou des champs caractéristiques prédéfinis, au moyen d'un microprocesseur, **caractérisé en ce que** la vitesse sélectionnée et ajustée par le microprocesseur est analysée, sélectionnée et ajustée en fonction de la fréquence d'actionnement d'un actionneur ou de la conception de la durée de vie d'une vitesse.
